Europäisches Patentamt

European Patent Office

Office européen des brevets

(11) Veröffentlichungsnummer: **0 231 806 B1**

(12) **EUROPÄISCHE PATENTSCHRIFT**

(45) Veröffentlichungstag der Patentschrift: **27.05.92**

(21) Anmeldenummer: **87100715.9**

(22) Anmeldetag: **20.01.87**

(51) Int. Cl.⁵: **B25H 3/00**

(54) **Abstell- und Prüfvorrichtung für Schraubenspannvorrichtungen.**

(30) Priorität: **05.02.86 DE 8602842 U**

(43) Veröffentlichungstag der Anmeldung:
**12.08.87 Patentblatt 87/33**

(45) Bekanntmachung des Hinweises auf die
Patenterteilung:
**27.05.92 Patentblatt 92/22**

(84) Benannte Vertragsstaaten:
**DE FR GB IT SE**

(56) Entgegenhaltungen:
**DE-C- 3 331 527**
**FR-A- 2 141 141**

(73) Patentinhaber: **Wirth Maschinen- und**
**Bohrgeräte-Fabrik GmbH**
**Kölner Strasse 71-78**
**W-5140 Erkelenz(DE)**

(72) Erfinder: **Ecker, Karl-Heinz**
**Wilhelmstrasse 38**
**W-5140 Erkelenz(DE)**
Erfinder: **Henschenmacher, Helmut**
**Schwarzer Weg 26**
**W-5142 Brachelen(DE)**

(74) Vertreter: **Koscholke, Gotthold, Dr.-Ing.**
**Rheinallee 147**
**W-4000 Düsseldorf 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Abstell- und Prüfvorrichtung für Schraubenspannvorrichtungen und zugeordnete Teile nach dem Oberbegriff des Anspruchs 1.

Schraubenspannvorrichtungen werden u.a. bei Deckelverschlüssen von Reaktorbehältern, Dampferzeugern und ähnlichen Aggregaten zum Herstellen und Lösen der durch Bolzen mit aufgeschraubten Muttern bewirkten Verbindung der Teile verwendet. Während des normalen Betriebes eines Reaktors oder Dampferzeugers wird die Schraubenspannvorrichtung nicht benutzt. Sie findet während dieser Zeit Aufnahme in einer Abstellvorrichtung. Die letztere ist zweckmäßig so ausgebildet, daß die Schraubenspannvorrichtung auch zusammen mit ausgeschraubten Bolzen abgesetzt werden kann, wobei diese Bolzen zur Überprüfung aus einem Tragring od.dgl. der Spannvorrichtung entfernt und in Aufnahmen eingesetzt werden können, die sich in der Abstellvorrichtung befinden. Schließlich werden solche Vorrichtungen vorteilhaft auch zur Prüfung einer Schraubenspannvorrichtung selbst eingerichtet und dabei mit besonderen Prüfbolzen ausgestattet. Eine derartige Vorrichtung ist aus der DE-C 33 31 527 bekannt.

Beim Überführen der Schraubenbolzen aus einer von Teilen der Abstellvorrichtung gehaltenen Schraubenspannvorrichtung in die entsprechenden Aufnahmen der Abstellvorrichtung ist normalerweise ein Wagen oder sonstiges Manipuliergerät erforderlich. Dessen Einsatz ist oft sehr problematisch, weil die Platzverhältnisse in Kernkraftwerken und ähnlichen Betrieben beengt sind. Dies führt dazu, daß in einer Abstellposition der Schraubenspannvorrichtung meist nur jeweils ein Teil der Schraubenbolzen bzw. der Spannvorrichtung überprüft werden kann und dann ein Umsetzen mittels eines Kranes notwendig ist, um einen anderen Teil bzw. weitere Schraubenbolzen für die Prüfung zugänglich zu machen. Weil bei einer Revision eines Reaktors zahlreiche Arbeitsvorgänge in möglichst kurzer Zeit bzw. gleichzeitig auszuführen sind und die Verfügbarkeit eines Kranes dementsprechend eingeschränkt ist, können sich außerdem noch unerwünschte Wartezeiten ergeben.

Hiernach ist es Aufgabe der Erfindung, bestehenden Schwierigkeiten und Nachteilen Rechnung zu tragen und eine Vorrichtung der eingangs genannten Art so auszubilden, daß sich günstige Bedingungen für den Einsatz der Vorrichtung und für die durchzuführenden Arbeiten ergeben. Dabei strebt die Erfindung auch eine vorteilhafte Gestaltung der Vorrichtung im einzelnen an.

Mit alledem zusammenhängende weitere Probleme, mit denen sich die Erfindung befaßt, ergeben sich aus der jeweiligen Erläuterung der aufgezeigten Lösung.

Die Erfindung sieht vor, daß der Gestellkörper der Vorrichtung drehbar gelagert ist. Dadurch ist es sehr einfach und ohne Umsetzvorgänge möglich, diejenigen Elemente bzw. Bereiche von Teilen, die gerade überprüft werden sollen, immer an ein und dieselbe Stelle einer Kraftwerkshalle oder einer sonstigen Baulichkeit zu bringen. Nur an dieser Stelle braucht dann der für ein Manipulieren mit einem Gerät und für die Prüfung benötigte Raum vorhanden zu sein. Damit ergibt sich auch insgesamt eine Platzersparnis bei der Anordnung und beim Einsatz der Vorrichtung.

Die drehbare Lagerung des Gestellkörpers läßt sich auf verschiedene Weise ausführen, u.a. auch nach Art einer Lagerung mit sog. Königszapfen. Besonders günstig ist eine mittenfreie Lagerung. Im übrigen läßt sich die Lagerausbildung im einzelnen so treffen, wie es den jeweiligen Erfordernissen am besten entspricht. Es kann sich um eine Gleitlagerung, insbesondere aber um eine Wälzlagerung handeln.

Die jeweils gewünschte Drehung des Gestellkörpers in der einen oder anderen Richtung kann im einfachsten Fall von Hand bewirkt werden, sei es unmittelbar, sei es mittels eines z.B. durch eine Kurbel zu betätigenden Getriebes als Antriebseinrichtung. Insbesondere ist ein motorischer Drehantrieb vorgesehen, vorteilhaft ein Elektromotor mit Getriebe.

Die Antriebseinrichtung enthält ungeachtet der sonstigen Ausbildung zweckmäßig einen am Gestellkörper angebrachten Innenzahnkranz, in den ein Antriebsritzel eingreift.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1    eine Ausführung der Vorrichtung teils in Ansicht, teils im vertikalen Schnitt,

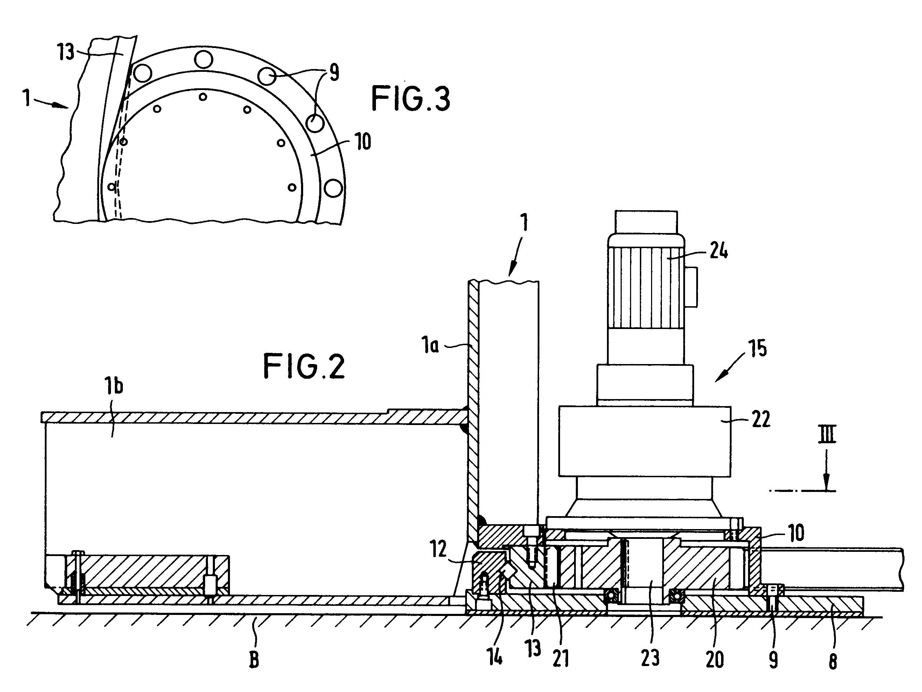

Fig. 2    die Antriebsstelle in größerem Maßstab und

Fig. 3    eine Teilansicht in Richtung des Pfeiles III in Fig. 2.

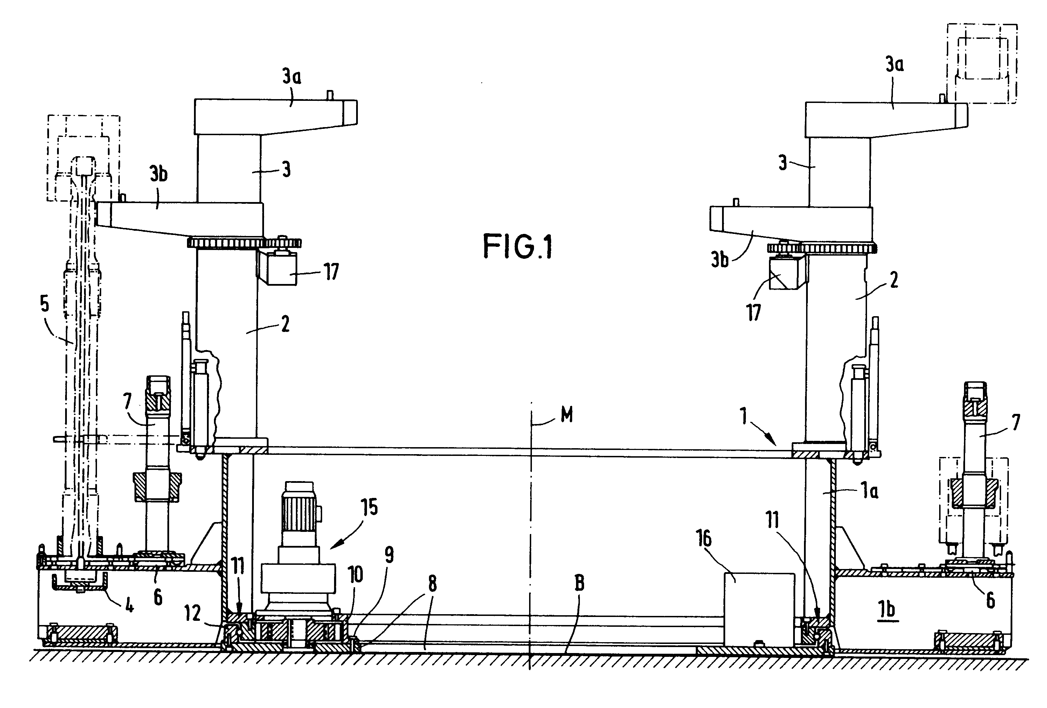

Die Vorrichtung weist einen ringförmigen Gestellkörper 1 auf, der aus einer geschweißten Stahlkonstruktion besteht. Auf einem zylindrischen Innenteil 1a befinden sich mehrere, über den Umfang verteilt angeordnete Säulen 2, die jeweils mittels eines Motors 17 um die vertikale Mittelachse der Säule drehbare Kopfstücke 3 mit Armen 3a und 3b tragen. Darauf kann jeweils ein in Fig. 1 strichpunktiert angedeuteter Tragring einer im übrigen nicht dargestellten Schraubenspannvorrichtung so Auflage finden, wie es die jeweils durchzuführenden Arbeitsgänge erfordern. Fig. 1 veranschaulicht in der rechten und in der linken Hälfte jeweils ein Beispiel dafür.

Mit dem Innenteil 1a des Gestellkörpers 1 ist ein ringförmiger Außenteil 1b fest verbunden, der an entsprechenden Stellen Aufnahmen 4 für Schraubenbolzen aufweist, von denen einer in der linken Hälfte der Fig. 1 bei der Zahl 5 strichpunktiert angedeutet ist.

Der Außenteil 1b ist ferner mit radial verschiebbaren Aufnahmen 6 für Prüfbolzen 7 versehen.

Ein auf dem Hallenflur oder Boden B ruhender Untersatz 8 weist einen äußeren Lagerring 12 auf, während am Innenteil 1a des Gestellkörpers 1 ein innerer Lagerring 13 befestigt ist. Diese bilden zusammen mit bei der Zahl 14 angedeuteten Wälzkörperanordnungen eine insgesamt mit der Zahl 11 bezeichnete mittenfreie Drehlagerung für den Gestellkörper 1. Der Innenraum der Vorrichtung ist somit frei zugänglich.

Der innere Lagerring 13 ist zugleich als Innenzahnkranz 21 ausgebildet, in den ein Antriebsritzel 20 eingreift. Dieses kann z.B. über einen Getriebezug von Hand mittels einer Kurbel gedreht werden. Bei der dargestellten Ausführung ist ein motorischer Drehantrieb 15 vorgesehen. Das Ritzel 20 sitzt dabei auf der Ausgangswelle 23 einer Getriebes 22, das mit einem Elektromotor 24 eine Einheit bildet. Die letztere ist an einem mit dem Untersatz 8 durch Schrauben 9 verbundenen Stützgehäuse 10 befestigt. An einer dem Drehantrieb 15 diametral gegenüberliegenden Stelle ist auf dem Untersatz 8 ein Gegengewicht 16 angebracht. Der Untersatz braucht nicht im Boden verankert zu sein.

Durch Einschalten des Drehantriebs 15 kann der gesamte Gestellkörper 1 jeweils in der einen oder anderen Richtung um einen gewünschten Winkel um die Mittelachse M gedreht werden. Dadurch läßt sich jeder Bereich und somit jeder Schraubenbolzen 5 bzw. jeder Prüfbolzen 7 an eine bestimmte Stelle bringen, die für die Durchführung eines Arbeits- oder Prüfvorganges vorgesehen ist.

Der Drehantrieb kann so steuerbar sein, daß sich jeweils bestimmte Winkelschritte ergeben. Auch können unabhängig vom Vorhandensein bzw. von der Art und Ausbildung eines Drehantriebs Verriegelungseinrichtungen vorgesehen sein, die es ermöglichen, dem Gestellkörper in bestimmten Drehpositionen relativ zum Untersatz festzulegen.

Es fällt weiterhin in den Rahmen der Erfindung, den Gestellkörper mit Rädern zu versehen und auf einer am Untersatz oder auch unmittelbar auf dem Boden befindlichen kreisförmigen Schiene laufen zu lassen.

## Patentansprüche

1. Abstell- und Prüfvorrichtung für Schraubenspannvorrichtungen und zugeordnete Teile, mit einem ringförmigen Gestellkörper (1), der einzelne Aufnahmen (4, 6) für Schrauben- bzw. Prüfbolzen sowie Konsolen od.dgl. zur Auflagerung des Tragringes einer Schraubenspannvorrichtung aufweist, dadurch gekennzeichnet, daß der Gestellkörper (1) drehbar gelagert ist.

2. Vorrichtung nach Ansspruch 1, dadurch gekennzeichnet, daß für den Gestellkörper (1) eine mittenfreie Lagerung (11) vorgesehen ist.

3. Vorrichtung nach einem der Ansprüche 1 und 2, dadurch gekennzeichnet, daß zum Drehen des Gestellkörpers (1) eine Antriebseinrichtung (15) vorgesehen ist.

4. Vorrichtung nach Anspruch 3, gekennzeichnet durch einen motorischen Drehantrieb (15) für den Gestellkörper (1).

5. Vorrichtung nach Anspruch 4, gekennzeichnet durch einen Elektromotor (16) mit Getriebe (17) als Drehantrieb.

6. Vorrichtung nach einem der Ansprüche 3 bis 5, dadurch gekennzeichnet, daß an dem Gestellkörper (1) ein Innenzahnkranz (21) vorgesehen ist, in den ein Antriebsritzel (20) eingreift.

7. Vorrichtung nach einem der Ansprüche 1 bis 6, dadurch gekennzeichnet, daß der Gestellkörper (1) mit Rädern versehen ist, für die eine kreisförmige Laufbahn vorgesehen ist.

## Claims

1. Depositing and testing apparatus for screw-tightening apparatus and associated parts, having an annular frame body (1) which has individual receivers (4, 6) for screw and test bolts, as well as consoles or the like for laying on of the carrier ring of a screw-tightening apparatus, characterized in that the frame body (1) is rotatably mounted.

2. Apparatus according to Claim 1, characterized in that there is provided for the frame body (1) a bearing (11) which is free in the centre.

3. Apparatus according to one of Claims 1 and 2, characterized in that a drive device (15) is provided for turning the frame body (1).

4. Apparatus according to Claim 3, characterized by a rotary motor drive (15) for the frame body (1).

5. Apparatus according to Claim 4, characterized by an electric motor (16) having a gear mechanism (17) as the rotary drive.

6. Apparatus according to one of Claims 3 to 5, characterized in that there is provided on the frame body (1) an internally toothed ring (21) in which a drive pinion (20) engages.

7. Apparatus according to one of Claims 1 to 6, characterized in that the frame body (1) is provided with wheels for which a circular track is provided.

**Revendications**

1. Appareil pour ranger et contrôler des dispositifs de serrage de goujons filetés et des éléments associés, comprenant un corps de bâti (1), en forme d'anneau, qui comporte des logements individuels (4, 6), pour des goujons filetés ou des goujons de contrôle, ainsi que des consoles, ou analogues, d'appui de l'anneau de support d'un dispositif de serrage des goujons filetés, caractérisé en ce que le corps de bâti (1) est monté de façon à pouvoir être déplacé en rotation.

2. Appareil suivant la revendication 1, caractérisé en ce qu'il est prévu un montage à palier (11), à partie centrale libre, pour le corps de bâti (1).

3. Appareil suivant l'une des revendications 1 et 2, caractérisé en ce qu'un dispositif d'entraînement (15) est prévu pour entraîner le corps de bâti (1) en rotation.

4. Appareil suivant la revendication 3, caractérisé par un entraînement en rotation (15), à moteur, pour le corps de bâti (1).

5. Appareil suivant la revendication 4, caractérisé par un moteur électrique (16) comportant un réducteur de vitesse (17) et servant d'entraînement en rotation.

6. Appareil suivant l'une des revendications 3 à 5, caractérisé en ce que, sur le corps de bâti (1), il est prévu une couronne (21) à denture intérieure avec laquelle un pignon d'entraînement (20) engrène.

7. Appareil suivant l'une des revendications 1 à 6, caractérisé en ce que le corps de bâti (1) est pourvu de roues qui coopèrent avec une voie circulaire de roulement.

FIG.1

EP 0 231 806 B1

FIG.3

FIG.2

EP 0 231 806 B1